# EUROPEAN PATENT APPLICATION

(11) **EP 2 705 895 A1**
(43) Date of publication of application: **12.03.2014**
(21) Application number: 13005539.5
(22) Date of filing: 14.05.2007
(51) Int. Cl.: B01D 67/00, B01D 71/36, B01D 69/02

(54) **Hydrophobic membrane coated with surfactant having superspreading properties**

(30) Priority: 15.05.2006 US 434102
(62) Divisional of application: 07794870.1
(71) Applicant: Momentive Performance Materials Inc., Waterford, NY 12188 (US)
(72) Inventor: Peng, Wenqing, 201203 Shanghai (CN); CAO, Chun, 229622 Singapore (SG); XIA, Zijun, 200135 Shanghai (CN); Wang, Dong, 200540 Shanghai (CN); Policello, George, Anthony, Ossining, NY 10562 (US); Leatherman, Mark, David, Elmsford, NY 10523 (US); Rajaraman, Suresh, Kalpattu, Newburgh, NY 12550 (US)
(74) Representative: Szary, Anne Catherine

(57) **Abstract**

An article includes a membrane having pores extending therethrough, and a surfactant in contact with a surface of the membrane. The surfactant may function as a superspreader when in solution. The membrane surface may wet in response to contact with a fluid. An associated method is provided.

## Description

### CROSS REFERENCE TO RELATED APPLICATIONS

This application is a continuation-in-part of Application Serial No. 11/301,707, filed December 13, 2005, and a continuation-in-part of Application Serial No. 11/302,551, filed December 13, 2005. This application claims priority to and benefit from the foregoing, the disclosures of which are incorporated herein by reference.

### BACKGROUND

### Technical Field.

The invention includes embodiments that relate to a membrane-based article. The invention includes embodiments that relate to a method of making the membrane-based article.

### Discussion of Related Art.

Membranes with high porosity, wettability, and chemical resistance may be used in liquid size exclusion filtration applications, coatings for medical devices, or ion exchange membranes in electrochemical cells. Polytetrafluoroethylene (PTFE) may be desirable for its chemical inertness and resistance, and expanded. PTFE (ePTFE) would be desirable for both chemical resistance and porosity. However, due to the hydrophobicity of PTFE, surface wetting may be problematic and may require treatment to render it hydrophilic. The surface, and pores in the surface, of the membrane may be rendered hydrophilic by physical adsorption, chemical modification of the bulk polymer, or surface grafting. Physical adsorption may result in an undesirable reversal of hydrophilicity in too short a period of time, and chemical modifications may be problematic during production.

Commercially available hydrophilic ePTFE membranes may be used in liquid water filtration. These membranes may be pre-wet by membrane manufacturers and shipped to end-users while still wet. Such a membrane may de-wet or dry. The drying of the membrane may render it ineffective, difficult to re-wet, and may necessitate undesirable shipping considerations (such as wet shipping). Other undesirable aspects include economic considerations such as the need for special handling and sealable containers, and increased shipping weight, and the like.

It may be desirable to have a membrane with properties that differ from those properties of currently available membranes. It may be desirable to have a membrane produced by a method that differs from those methods currently available.

### BRIEF DESCRIPTION

In one embodiment, an article includes a membrane having pores extending from a first surface through the membrane to a second surface and a surfactant. The surfactant contacts at least one surface of the membrane. The surfactant functions as a superspreader when in solution. The article may wet the membrane in response to contact with a fluid.

In one embodiment, a method includes contacting a surface of a porous membrane with a surfactant. The surfactant functions as a superspreader when in solution. The method includes contacting the membrane with a fluid to wet the membrane surface.

In one embodiment, an article includes a chemically inert, hydrophobic, means for filtering fluid, and a means for hydrophiliphizing a surface of the fluid filtering means.

### BRIEF DESCRIPTION OF THE DRAWINGS

Fig. 1 is an optical image of a water droplet in contact with an untreated ePTFE membrane.
Fig. 2 is an optical image of a water droplet in contact with a treated ePTFE membrane.

### DETAILED DESCRIPTION

The invention includes embodiments that relate to a membrane-based article that includes a surfactant. The invention includes embodiments that relate to an apparatus that includes the article. The invention includes embodiments that relate to a method of using the article and/or apparatus.

In the following specification and the claims which follow, reference will be made to a number of terms have the following meanings. The singular forms "a", "an" and "the" include plural referents unless the context clearly dictates otherwise. Approximating language, as used herein throughout the specification and claims, may be applied to modify any quantitative representation that could permissibly vary without resulting in a change in the basic function to which it is related. Accordingly, a value modified by a term such as "about" is not to be limited to the precise value specified. In some instances, the approximating language may correspond to the precision of an instrument for measuring the value. Similarly, "free" may be used in combination with a term, and may include an insubstantial number, or trace amounts, while still being considered free of the modified term. A membrane is an article of natural or synthetic material that is permeable to one or more solutes and/or solvents in a solution.

As used herein, the terms "may" and "may be" indicate a possibility of an occurrence within a set of circumstances; a possession of a specified property, characteristic or function; and/or qualify another verb by expressing one or more of an ability, capability, or possibility associated with the qualified verb. Accordingly, usage of "may" and "may be" indicates that a modified term is apparently appropriate, capable, or suitable for an indicated capacity, function, or usage, while taking into account that in some circumstances the modified term may sometimes not be appropriate, capable, or suitable. For example, in some circumstances an event or capacity can be expected, while in other circumstances the event or capacity cannot occur- this distinction is captured by the terms "may" and "may be".

An article according to an embodiment of the invention includes a porous membrane and a surfactant in contact with the porous membrane. A porous membrane includes a plurality of pores. The pore size, density, and distribution may be determined by the end used envisaged. The surfactant may function as a superspreader when in solution. A superspreader may provide surface tension values lower than other commonly used surfactants, and have the property of "super-spreading". Superspreading is the ability of a drop of the solution to spread to a diameter that is greater than the diameter of a drop of distilled water on a hydrophobic surface; and, the diameter to which the superspreader solution spreads is greater than a diameter to which a solution of water and a non-super-spreading surfactant would spread on the hydrophobic surface. In addition to the spread diameter difference, the contact angle of a superspreader solution droplet on a surface is relatively larger than a contact angle of a non-super-spreading surfactant solution droplet on a surface. Values of, for example, the spread diameter and contact angle for superspreader surfactants are disclosed hereinbelow. Reference to "surfactant" herein is to superspreaders unless context or language indicates otherwise. Suitable superspreader surfactants include one or more of trisiloxane alkoxylate-based surfactants, Gemini silicon-based surfactants, or hydrolytically stable surfactants.

A suitable surfactant includes an organsiloxane, an organosilane, or combinations of organosiloxanes and organosilanes. In one embodiment, the surfactant includes an organosiloxane having a general formula M¹DₙDₚM². The general formula can be expressed particularly as formula (I):

(I) (R¹R²R³SiO_{1/2})(R⁴R⁵SiO_{2/2})ₙR⁶R¹⁰SiO_{2/2})ₚ(R⁷R⁸R⁹SiO_{1/2})

wherein "n" is an integer from 0 to 50; "p" is an integer from 1 to 50; R¹ to R⁹ are independently at each occurrence a hydrogen atom, an aliphatic radical, an aromatic radical, or a cycloaliphatic radical; and R¹⁰ is a polyoxyalkylene having formula (II):

(II) R¹³(C₂H₃R¹¹O)_{w}(C₃H₆O)ₓ(C₄H₈O)_{y}R¹²

wherein "w", "y" and "z" are independently an integer from 0 to 20, with the proviso that "w" is greater than or equal to 2 and "w + x + y" is in a range of from about 2 to about 20; R¹¹ is a hydrogen atom or an aliphatic radical, R¹² is a hydrogen atom, an aliphatic radical, or a carboxylate; and R¹³ is a divalent aliphatic radical having structure (III):

(III) -CH₂-CH(R¹⁴)(R¹⁵)_{z}O-

wherein R¹⁴ is a hydrogen atom or an aliphatic radical, R¹⁵ is a divalent aliphatic radical, and "z" is 0 or 1.

Where integers are supplied, averaging may create experimental situations where fractional values are indicated. The use of integers includes mixtures of distributions in which the averages are fractions. Aliphatic radical, aromatic radical and cycloaliphatic radical may be defined as follows:

An aliphatic radical is an organic radical having at least one carbon atom, a valence of at least one, and may be a linear or branched array of atoms. Aliphatic radicals may include heteroatoms such as nitrogen, sulfur, silicon, selenium and oxygen or may be composed exclusively of carbon and hydrogen. Aliphatic radical may include a wide range of functional groups such as alkyl groups, alkenyl groups, alkynyl groups, halo alkyl groups, conjugated dienyl groups, alcohol groups, ether groups, aldehyde groups, ketone groups, carboxylic acid groups, acyl groups (for example, carboxylic acid derivatives such as esters and amides), amine groups, nitro groups and the like. For example, the 4-methylpent-1-yl radical is a C₆ aliphatic radical comprising a methyl group, the methyl group being a functional group, which is an alkyl group. Similarly, the 4-nitrobut-1-yl group is a C₄ aliphatic radical comprising a nitro group, the nitro group being a functional group. An aliphatic radical may be a haloalkyl group that includes one or more halogen atoms, which may be the same or different. Halogen atoms include, for example; fluorine, chlorine, bromine, and iodine. Aliphatic radicals having one or more halogen atoms include the alkyl halides: trifluoromethyl, bromodifluoromethyl, chlorodifluoromethyl, hexafluoroisopropylidene, chloromethyl, difluorovinylidene, trichloromethyl, bromodichloromethyl, bromoethyl, 2-bromotrimethylene (e.g., -CH₂CHBrCH₂-), and the like. Further examples of aliphatic radicals include allyl, aminocarbonyl (-CONH₂), carbonyl, dicyanoisopropylidene -CH₂C(CN)₂CH₂-), methyl (-CH₃), methylene (-CH₂-), ethyl, ethylene, formyl (-CHO), hexyl, hexamethylene, hydroxymethyl (-CH₂OH), mercaptomethyl (-CH₂SH), methylthio (-SCH₃), methylthiomethyl (-CH₂SCH₃), methoxy, methoxycarbonyl (CH₃OCO-), nitromethyl (-CH₂NO₂), thiocarbonyl, trimethylsilyl ((CH₃)₃Si-), t-butyldimethylsilyl, trimethoxysilylpropyl ((CH₃O)₃SiCH₂CH₂CH₂-), vinyl, vinylidene, and the like. By way of further example, a "C₁ - C₃₀ aliphatic radical" contains at least one but no more than 30 carbon atoms. A methyl group (CH₃-) is an example of a C₁ aliphatic radical. A decyl group (CH₃(CH₂)₉-) is an example of a C₁₀ aliphatic radical.

An aromatic radical is an array of atoms having a valence of at least one, and having at least one aromatic group. This may include heteroatoms such as nitrogen, sulfur, selenium, silicon and oxygen, or may be composed exclusively of carbon and hydrogen. Suitable aromatic radicals may include phenyl, pyridyl, furanyl, thienyl, naphthyl, phenylene, and biphenyl radicals. The aromatic group may be a cyclic structure having 4n+2 "delocalized" electrons where "n" is an integer equal to 1 or greater, as illustrated by phenyl groups (n = 1), thienyl groups (n = 1), furanyl groups (n = 1), naphthyl groups (n = 2), azulenyl groups (n = 2), anthracenyl groups (n = 3) and the like. The aromatic radical also may include non-aromatic components. For example, a benzyl group may be an aromatic radical, which includes a phenyl ring (the aromatic group) and a methylene group (the non-aromatic component). Similarly, a tetrahydronaphthyl radical is an aromatic radical comprising an aromatic group (C₆H₃) fused to a non-aromatic component -(CH₂)₄-. An aromatic radical may include one or more functional groups, such as alkyl groups, alkenyl groups, alkynyl groups, haloalkyl groups, haloaromatic groups, conjugated dienyl groups, alcohol groups, ether groups, aldehyde groups, ketone groups, carboxylic acid groups, acyl groups (for example carboxylic acid derivatives such as esters and amides), amine groups, nitro groups, and the like. For example, the 4-methylphenyl radical is a C₇ aromatic radical comprising a methyl group, the methyl group being a functional group, which is an alkyl group. Similarly, the 2-nitrophenyl group is a C6 aromatic radical comprising a nitro group, the nitro group being a functional group. Aromatic radicals include halogenated aromatic radicals such as trifluoromethylphenyl, hexafluoroisopropylidenebis (4-phen-1-yloxy) (-OPhC(CF₃)₂PhO-), chloromethylphenyl, 3-trifluorovinyl-2-thienyl, 3-trichloromethyl phen-1-yl (3-CCl₃Ph-), 4-(3-bromoprop-1-yl) phen-1-yl (BrCH₂CH₂CH₂Ph-), and the like. Further examples of aromatic radicals include 4-allyloxyphen-1-oxy, 4-aminophen-1-yl (H₂NPh-), 3-aminocarbonylphen-1-yl (NH₂COPh-), 4-benzoylphen-1-yl, dicyanoisopropylidenebis(4-phen-1-yloxy) (-OPhC(CN)₂PhO-), 3-methylphen-1-yl, methylene bis(phen-4-yloxy) (-OPhCH₂PhO-), 2-ethylphen-1-yl, phenylethenyl, 3-formyl-2-thienyl, 2-hexyl-5-furanyl; hexamethylene-1,6-bis (phen-4-yloxy) (-OPh(CH₂)₆PhO-), 4-hydroxymethyl phen-1-yl (4-HOCH₂Ph-), 4-mercaptomethyl phen-1-yl (4-HSCH₂Ph-), 4-methylthio phen-1-yl (4-CH₃SPh-), 3-methoxy phen-1-yl, 2-methoxycarbonyl phen-1-yloxy (e.g., methyl salicyl), 2-nitromethyl phen-1-yl (-PhCH₂NO₂), 3-trimethylsilylphen-1-yl, 4-t-butyldimethylsilylphenl-1-yl, 4-vinylphen-1-yl, vinylidenebis(phenyl), and the like. The term "a C₃ - C₃₀ aromatic radical" includes aromatic radicals containing at least three but no more than 30 carbon atoms. The aromatic radical 1-imidazolyl (C₃H₂N₂-) represents a C₃ aromatic radical. The benzyl radical (C₇H₇-) represents a C₇ aromatic radical.

A cycloaliphatic radical is a radical having a valence of at least one, and having an array of atoms, which is cyclic but which is not aromatic. A cycloaliphatic radical may include one or more non-cyclic components. For example, a cyclohexylmethyl group (C₆H₁₁CH₂-) is a cycloaliphatic radical, which includes a cyclohexyl ring (the array of atoms, which is cyclic but which is not aromatic) and a methylene group (the noncyclic component). The cycloaliphatic radical may include heteroatoms such as nitrogen, sulfur, selenium, silicon and oxygen, or may be composed exclusively of carbon and hydrogen. A cycloaliphatic radical may include one or more functional groups, such as alkyl groups, alkenyl groups, alkynyl groups, halo alkyl groups, conjugated dienyl groups, alcohol groups, ether groups, aldehyde groups, ketone groups, carboxylic acid groups, acyl groups (for example carboxylic acid derivatives such as esters and amides), amine groups, nitro groups and the like. For example, the 4-methylcyclopent-1-yl radical is a C₆ cycloaliphatic radical comprising a methyl group, the methyl group being a functional group, which is an alkyl group. Similarly, the 2-nitrocyclobut-1-yl radical is a C₄ cycloaliphatic radical comprising a nitro group, the nitro group being a functional group. A cycloaliphalic radical may include one or more halogen atoms, which may be the same or different. Halogen atoms include, for example, fluorine, chlorine, bromine, and iodine. Cycloaliphatic radicals having one or more halogen atoms include 2-trifluoromethylcyclohex-1-yl, 4-bromodifluoromethylcyclooct-1-yl, 2-chlorodifluoromethylcyclohex-1-yl, hexafluoroisopropylidene 2,2-bis (cyclohex-4-yl) (-C₆H₁₀C(CF₃)₂C₆H₁₀-), 2-chloromethyleyclohex- I -yl; 3-difluoromethylenecyclohex-1-yl; 4-trichloromethylcyclohex-1-yloxy, 4-bromodichloromethylcyclohex-1-ylthio, 2-bromoethylcyclopent-1-yl, 2-bromopropylcyclohex-1-yloxy (e.g. CH₃CHBrCH₂C₆H₁₀-), and the like. Further examples of cycloaliphatic radicals include 4-allyloxycyclohex-1-yl, 4-aminocyclohex-1-yl (H₂NC₆H₁₀-), 4-aminocarbonylcyclopent-1-yl (NH₂COC₅H₈-), 4-acetyloxycyclohex-1-yl, 2,2-dicyanoisopropylidenebis(cyclohex-4-yloxy) (-OC₆H₁₀C(CN)₂C₆H₁₀O-), 3-methylcyclohex-1-yl, methylenebis(cyclohex-4-yloxy) (-OC₆H₁₀CH₂C₆H₁₀O-), 1-ethylcyclobut-1-yl, cyclopropylethenyl, 3-formyl-2-terahydrofuranyl, 2-hexyl-5-tetrahydrofuranyl; hexamethylene-1,6-bis(cyclohex-4-yloxy) (-OC₆H₁₀(CH₂)₆C₆H₁₀O-); 4-hydroxymethylcyclohex-1-yl (4-HOCH₂C₆H₁₀-), 4-mercaptomethylcyclohex-1-yl (4-HSCH₂C₆H₁₀-), 4-methylthiocyclohex-1-yl (4-CH₃SC₆H₁₀-), 4-methoxycyclohex-1-yl, 2-methoxycarbonylcyclohex-1-yloxy (2-CH₃OCOC₆H₁₀O-), 4-nitromethylcyclohex-1-yl (NO₂CH₂C₆H₁₀-), 3-trimethylsilylcyclohex-1-yl, 2-t-butyldimethylsilylcyclopent-1-yl, 4-trimethoxysilylethylcyclohex-1-yl (e.g. (CH₃O)₃SiCH₂CH₂C₆H₁₀-), 4-vinylcyclohexen-1-yl, vinylidenebis(cyclohexyl), and the like. The term "a C₃ - C₃₀ cycloaliphatic radical" includes cycloaliphatic radicals containing at least three but no more than 10 carbon atoms. The cycloaliphatic radical 2-tetrahydrofuranyl (C₄H₇O-) represents a C₄ cycloaliphatic radical. The cyclohexylmethyl radical (C₆H₁₁CH₂-) represents a C₇ cycloaliphatic radical.

In one embodiment, the surfactant includes a trisiloxane alkoxylate-based surfactant (TSA). The oxyalkylene groups in the TSA-based surfactants include one or more of oxyethylene, oxypropylene, or oxybutylene. If more than one type of oxyalkylene is present, the different oxyalkylene units in the copolymer may be present as alternating units, as blocks, or may be randomly distributed. In one embodiment, the surfactant includes a trisiloxane ethoxylate-based surfactant (TSE).

TSA-based surfactants may be commercially available or may be chemically synthesized. Commercial TSA-based surfactants may be available under the trade names of SILWET, for example, SILWET L-77, SILWET L-408, SILWET L-806, or SF, such as SF1188 A, SF1288 from GE Advanced Materials, Silicones (Wilton, CT). TSA-based surfactant may be chemically synthesized by a hydrosilylation reaction of a silicon hydride-containing organosiloxane with an unsaturated polyoxyalkylene derivative.

The silicon hydride-containing organosiloxane may have formula (IV):

(IV) (R¹R²R³SiO_{1/2})(R⁴R⁵SiO_{2/2})ₙ(R⁶HSiO_{2/2})ₚ(R⁷R⁸R⁹SiO_{1/2})

wherein the integers "n" and "p"; the radicals R¹ to R⁹ are the same as defined hereinabove; and H is a hydrogen atom. The unsaturated polyoxyalkylene derivative may have formula (V):

(V) CH₂=CH(R¹⁴)(R¹⁵)_{z}O(C₂H₃R¹¹O)_{w}(C₃H₆O)ₓ(C₄H₈O)_{y}R¹²

wherein the integers "w", "x", "y" and "z"; and the radicals R¹¹, R¹², R¹³, and R¹⁴ are the same as defined hereinabove. Suitable examples of unsaturated polyoxyalkylene derivatives of formula (V) include allyl-functionalized polyoxyethylene and methallyl-functionalized polyoxyethylene.

Hydrosilylation reaction may be catalyzed by use of hydrosilylation catalysts. Suitable hydrosilylation catalysts include one or more of rhodium, platinum, palladium, nickel, rhenium, ruthenium, osmium, copper, cobalt or iron. Suitable platinum catalysts may be used for the hydrosilylation reaction. A suitable platinum compound may have the formula (PtCl₂Olefin) or H(PtCl₃Olefin). Another suitable platinum catalyst include a cyclopropane complex or a complex formed from chloroplatinic acid with up to 2 moles per gram of platinum and one or more of alcohols, ethers, or aldehydes.

The hydrosilylation products of SiH-containing organosiloxanes and unsaturated polyoxyalkylene derivatives may contain excess unsaturated polyoxyalkylene derivative, or be an isomerization product or derivative thereof. The linear ogranosiloxane and their mixtures may contain up to 10 percent weight of cyclic organosiloxane or cyclic organosilane. The hydrosilylation products of SiH-containing organosiloxanes with unsaturated polyoxyalkylene derivatives may also contain unreacted cyclic organosiloxane.

In one embodiment, the surfactant includes a first hydrophobic moiety linked to a spacer, which is linked to a second hydrophobic moiety to form a Gemini surfactant. The first hydrophobic moiety and the second hydrophobic moiety each includes silicon. Gemini surfactants are surfactants having two or more hydrophobic groups and at least one hydrophilic group attached to hydrophobic portions in the molecule.

In one embodiment, the spacer includes a hydrophilic moiety. Suitable hydrophilic moieties include one or more of a cationic group, an anionic group, a polar nonionic group, or an amphoteric group. Suitable cationic groups include, but are not limited to, ammonium groups or positively charged peptide groups. Suitable anionic groups include, but are not limited to, carboxylic acid groups, sulfonic acid groups, sulfuric acid groups, sulfinic acid groups, phosphonic acid groups, boronic acid groups, fatty acid groups, or negatively charged peptide groups. Suitable polar non-ionic groups includes, but are not limited to, fatty acid ester groups, carbohydrate groups, or polyether and its derivatives. Suitable amphoteric groups include, but are not limited to, peptide groups. In one embodiment, a cationic group (for example an ammonium group) and an anionic group (for example a phosphate group) are present in the spacer to form an amphoteric surfactant.

The terms anionic group and cationic group may encompass both protonated and deprotonated forms of the anionic and the cationic groups. For example, when the anionic group is described as a "carboxylic acid group", both the protonated form of the carboxylic acid (CO₂H) and deprotonated form of the carboxylic acid (CO₂⁻) may be included within the meaning of the term "carboxylic acid group". Thus, the cationic group and the anionic group include salts of carboxylic acid group, a sulfonic acid group, a sulfuric acid group, a sulfinic acid group, a phosphoric acid group, a boronic acid group, or a fatty acid group.

A peptide group for the spacer has a linear sequence of amino acids connected to the other by peptide bonds between the alpha amino and carboxyl groups of adjacent amino acids. The amino acids may be the standard amino acids or some other non standard amino acids. Some of the standard nonpolar (hydrophobic) amino acids include alanine (Ala), leucine (Leu), isoleucine (Ile), valine (Val), proline (Pro), phenylalanine (Phe), tryptophan (Trp) and methionine (Met). The polar neutral amino acids include glycine (Gly), serine (Ser), threonine (Thr), cysteine (Cys), tyrosine (Tyr), asparagine (Asn) and glutamine (Gln). The positively charged (basic) amino acids include arginine (Arg), lysine (Lys) and histidine (His). The negatively charged (acidic) amino acids include aspartic acid (Asp) and glutamic acid (Glu). The non standard amino acids may be formed in body, for example by posttranslational modification, some examples of such amino acids being selenocysteine and pyrolysine. The peptides may be selected to have differing lengths, either in their neutral (uncharged) form or in forms such as their salts. The peptides are optionally free of modifications such as glycosylations, side chain oxidation or phosphorylation or comprising such modifications. Substitutes for an amino acid within the sequence are selected from other members of the class to which the amino acid belongs. A suitable peptide group includes peptides modified by additional substituents attached to the amino side chains, such as glycosyl units, lipids or inorganic ions such as phosphates as well as chemical modifications of the chains. Thus, the term "peptide" or its equivalent includes the appropriate amino acid sequence referenced, subject to the foregoing modifications, which do not destroy its functionality.

A carbohydrate group for the spacer may be a polyhydroxy aldehyde or ketone, or a compound that can be derived from them by any of several means including (1) reduction to give sugar alcohols; (2) oxidation to give sugar acids; (3) substitution of one or more of the hydroxyl groups by various chemical groups, for example, hydrogen may be substituted to give deoxysugars, and amino group (NH2 or acetyl-NH) may be substituted to give amino sugars; (4) derivatization of the hydroxyl groups by various moieties, for example, phosphoric acid to give phosphor sugars, or sulphuric acid to give sulfo sugars, or reaction of the hydroxyl groups with alcohols to give monosaccharides, disaccharides, oligosaccharides, and polysaccharides. Carbohydrate groups include monosaccharides, disaccharides, or oligosaccharides. Suitable monosachharides may include, but are not limited to, glucose, fructose, mannose and galactose. A disachharide, as further defined herein, is a compound, which upon hydrolysis yields two molecules of a monosachharide. Suitable disachharides include, but are not limited to, lactose, maltose, isomaltose, trehalose, maltulose, and sucrose. Suitable oligosachharides include, but are not limited to, raffinose and acarbose. Also included are the sachharides modified by additional substituents, for example, methyl glycosides, N-acetyl-glucosamine, N-acetyl-galactosamine and their de-acetylated forms.

A polyether group for the spacer may have structure of formula (VI).

(VI) -(CH₂)ₐ-O-(C₂H₄O)_{b}(C₂H₃R¹⁶O)_{c}-(CH₂)ₐ-

wherein "a" is independently at each occurrence an integer from 1 to 6, "b" and "c" are independently integers from 0 to 12, with the proviso that "b + c" is less than or equal to 12, and R¹⁶ is an aliphatic radical. The oxyalkylene polymers included in structure (V) may have a broad molecular weight distribution and the indices "b" and "c" stated above designate the average composition only. In one embodiment, the molecular weight distribution of oxyalkylene polymers may be less than about 1.2. The distribution of the different oxylakyene units may be random, alternating or in blocks.

The first hydrophobic moiety and the second hydrophobic moiety of the Gemini surfactant includes one or more organosiloxane groups or organosilane groups. In one embodiment, the first hydrophobic group and the second hydrophobic group are the same on either side of the spacer. In one embodiment, the first hydrophobic group and the second hydrophobic group on opposing sides of the spacer differ from each other.

Suitable organosiloxane groups may have a structure of formula (VII) or (VIII);

(VII) (R¹⁷R¹⁸R¹⁹SiO_{1/2})₂(R²⁰R²¹SiO_{2/2})_{d}(R²²SiO_{2/2})-

(VIII) (R²³R²⁴R²⁵SiO_{1/2})(R²⁶R²⁷SiO_{2/2})_{f}(R²⁸R²⁹SiO_{1/2})-

wherein "d" is an integer from 0 to 50, "f" is an integer from 1 to 50, and R¹⁷ to R²⁹ are independently at each occurrence a hydrogen atom, an aliphatic radical, an aromatic radical, or a cycloaliphatic radical.

Suitable organosilane groups may have a structure of formula (IX), (X), (XI) or (XII);

(IX) (R³⁰R³¹R³²Si)₂(R³³R³⁴Si)_{d}(R³⁵Si)-

(X) (R³⁶R³⁷R³⁸Si)(R³⁹R⁴⁰Si)_{f}(R⁴¹R⁴²Si)-

(XI) (R⁴³R⁴⁴R⁴⁵Si)₂(CR⁴⁶R⁴⁷)_{d}(R⁴⁸Si)-

(XII) (R⁴⁹R⁵⁰R⁵¹Si)(CR⁵²R⁵³)_{f}(R⁵⁴R⁵⁵Si)-

wherein "d" is independently at each occurrence an integer from 0 to 50, "f" is independently at each occurrence an integer from 1 to 50, and R³⁰ to R⁵⁵ are independently at each occurrence a hydrogen atom, an aliphatic radical, an aromatic radical, or a cycloaliphatic radical.

In one embodiment, a bifunctional spacer links to the first hydrophobic moiety and the second hydrophobic moiety simultaneously. Alternatively, a bifunctional spacer first links to the first hydrophobic moiety, and subsequently links to the second hydrophobic moiety. In one embodiment, an initially monofunctional spacer may be linked to the first hydrophobic moiety, subsequently functionalized, and linked to the second hydrophobic moiety. Linking of spacer to the hydrophobic moiety may occur by hydrosilylation reaction of a silicon hydride-containing organosiloxane group or organosilane group and a spacer having unsaturated carbon-carbon bonds. Hydrosilylation reaction may be catalyzed by use of hydrosilylation catalysts, as described hereinabove.

In one embodiment, a first hydrophobic moiety and a second hydrophobic moiety having silicon hydride-containing organosiloxane groups or organosilane groups may be linked by a spacer having unsaturated polyoxyalkylene derivatives by using a hydrosilylation catalyst. In one embodiment, two trimethylsiloxanes represented by structure (VII) may be linked by hydrosilylation reaction of a silicon hydride containing trimethylsiloxane moiety and an unsaturated polyoxyalkylene derivative, such as a diallyl derivative, in the presence of a platinum catalyst resulting in a Gemini surfactant.

In one embodiment, the surfactant may include an organosiloxane having having a general formula M¹DⱼM². The general formula can be expressed particularly as formula (XIII);

(XIII) (R⁵⁶R⁵⁷R⁵⁸SiO_{1/2})(R⁵⁹R⁶⁰SiO_{2/2})ⱼ(R⁶⁰R⁶¹R¹⁰SiO_{1/2})

wherein "j" is an integer from 0 to 50; R⁵⁶ is a branched aliphatic radical, an aromatic radical, a cycloaliphatic radical, or R⁶²R⁶³R⁶⁴SiR⁶⁵; R⁵⁷ and R⁵⁸ are independently at each occurrence a hydrogen atom, an aliphatic radical, an aromatic radical, a cycloaliphatic radical, or a R⁵⁶ radical; R⁵⁹, R⁶⁰, R⁶², R⁶³, and R⁶⁴ are independently at each occurrence a hydrogen atom, an aliphatic radical, an aromatic radical, or a cycloaliphatic radical; R⁶⁵ is a divalent aliphatic radical, a divalent aromatic radical, or a divalent cycloaliphatic radical; R¹⁰ is the same as a polyoxyalkylene having formula (II) as described hereinabove; and R⁶⁰ and R⁶¹ are independently at each occurrence a hydrogen atom, an aliphatic radical, an aromatic radical, a cycloaliphatic radical, or a R⁵⁶ radical. In one embodiment, j is 0. In one embodiment, j is 1.

In one embodiment, R⁵⁶ includes a branched aliphatic radical or R⁶²R⁶³R⁶⁴SiR⁶⁵. In one embodiment, R⁵⁷ to R⁶¹ includes a methyl radical and R⁵⁶ may be one of (CH₃)₂CHCH₂-, (CH3)₂CHCH₂CH₂-, (CH₃)₃C-, (CH₃)₃CCH₂CH₂-, (CH₃)₃CCH₂-, (CH₃)₃SiCH₂-, or (CH₃)₃SiCH₂CH₂-. Surfactants with formula (XIII) may be chemically synthesized by a hydrosilylation reaction of a silicon hydride-containing organosiloxane with an unsaturated polyoxyalkylene derivative.

In one embodiment, the silicon hydride-containing organosiloxane has the structure as defined in formula (XIV):

(XIV) (R⁵⁶R⁵⁷R⁵⁸SiO_{1/2})(R⁵⁹R⁶⁰SiO_{2/2})ⱼ(R⁶⁰R⁶⁰R⁶¹HSiO_{1/2})

wherein the integer "j"; the radicals R⁵⁶ to R⁶¹ are the same as defined hereinabove; and H is a hydrogen atom. The unsaturated polyoxyalkylene derivative may have formula (V) as described hereinabove. The hydrosilylation reaction may be catalyzed using a hydrosilylation catalyst.

In one embodiment, the surfactant includes an organosilane having formula (XV);

(XV) (R⁶²R⁶³R⁶⁴SiR⁶⁹)(R⁶⁵R⁶⁶SiR⁷⁰)ₖ(R⁶⁷R⁶⁸R¹⁰Si)

wherein "k" is an integer from 0 to 50; R⁶² to R⁶⁸ are independently at each occurrence a hydrogen atom, an aliphatic radical, an aromatic radical, or a cycloaliphatic radical, R⁶⁹ and R⁷⁰ are independently at each occurrence a divalent aliphatic radical, a divalent aromatic radical, or a divalent cycloaliphatic radical; and R¹⁰ is the same as a polyoxyalkylene having formula (II) as described hereinabove. Surfactants with formula (XV) may be chemically synthesized by a hydrosilylation reaction of a silicon hydride-containing organosiloxane with an unsaturated polyoxyalkylene derivative.

The surfactants may be characterized by one or more of hydrophobic/lipophobic balance (HLB), calorimetry, conductometry, electron spin resonance (ESR) spectroscopy, goniometry, microscopy, light scattering, neutron scattering, nuclear magnetic resonance (NMR) spectroscopy, rheometry, spectrophotometry, tensiometry, gas chromatography, atomic absorption spectroscopy, infra red (IR) spectroscopy, and the like. Suitable properties that may be determined by one of these techniques include one or more of hydrolytic stability, spreading properties, aggregation formation and structure, surface activity, solubilization, adsorption, wetting, foaming, phase behavior, flow, and thermotropic properties.

The super-spreading properties of the surfactant may be determined for an aqueous solution of the surfactant to provide total wetting as measured by a contact angle on a hydrophobic surface. In one embodiment, an aqueous solution of the surfactant may be super-spreading at a concentration greater than about 0.1 weight percent. In one embodiment, an aqueous solution of the surfactant may be super-spreading at a concentration in a range of from about 0.1 weight percent to about 0.5 weight percent, from about 0.5 weight percent to about 1 weight percent, from about 1 weight percent to about 2 weight percent, from about 2 weight percent to about 3.5 weight percent, or from about 3.5 weight percent to about 5 weight percent. In one embodiment, an aqueous solution of the surfactant may be super-spreading at a concentration greater than about 5 weight percent. In one embodiment, a 10 microliter (µL) drop of an aqueous solution of the surfactant of concentration greater than about 0.1 weight percent may spread to a diameter of about 5 to about 6, of about 6 to about 7, of about 7 to about 8, or of about 8 to about 9 times or greater than a 10 microliter drop of distilled water on the same hydrophobic surface; the diameter being measured at 30 seconds or at 120 seconds after application of the drop to the surface. Here and throughout the specification and claims, range limitations may be combined and/or interchanged. Such ranges as identified include all the sub-ranges contained therein unless context or language indicates otherwise.

The surface tension of an aqueous solution of the surfactant of a concentration greater than about 0.1 weight percent may be in a range of less than about 10 mN/m. In one embodiment, the surfactant may have an aqueous surface tension in a range of from about 10 mN/m to about 8 mN/m, from about 8 mN/m to about 5 mN/m, or from about 5 mN/m to about 1 mN/m.

The hydrolytic stability of the surfactant may be determined at a pH in a range of from about 2 to about 10, and at a temperature of 25 degrees Celsius for a time period greater than 24 hours. In one embodiment, the surfactant may be stable at a pH in a range of from about 2 to about 4, from about 4 to about 6, or from about 6 to about 7, at a temperature of 25 degrees Celsius for a time period greater than 24 hours. In one embodiment, the surfactant may be stable at a pH in a range of from about 7 to about 8, from about 8 to about 9, or from about 9 to about 10, at a temperature of 25 degrees Celsius for a time period greater than 24 hours.

The critical aggregation concentration (CAC) of an aqueous solution of the surfactant may be the concentration above which monomeric surfactant molecules of the surfactant abruptly form aggregates. In one embodiment, the surfactant may have an aqueous critical aggregation concentration greater than about 0.001 milli-mole (mM). In one embodiment, the surfactant may have an aqueous critical aggregation concentration in a range from about 0.001 mM to about 0.01 mM, from about 0.01 mM to about 0.1 mM, from about 0.1 mM to about 1 mM, from about 1 mM to about 10 mM, or from about 10 mM to about 100 mM.

A suitable porous membrane includes one or more of polyalkene, polyarylene, polyamide, polyester, polysulfone, polyether, polyacrylic, polystyrene, polyurethane, polyarylate, polyimide, polycarbonate, polysiloxane, polyphenylene oxide, cellulosic polymer, or substituted derivatives thereof. In some embodiments, the porous membrane includes a biocompatible material or a biodegradable material, such as aliphatic polyesters, polypeptides and other naturally occurring polymers.

In one embodiment, the membrane includes a halogenated polyalkene. A suitable halogenated polyalkene may be polyvinylidenefluoride or polytetrafluoroethylene. In one embodiment, an initially hydrophobic membrane, such as an expanded polytetrafluoroethylene (ePTFE) membrane, may be used. Suitable ePTFE membranes may be commercially obtainable from General Electric Energy (Kansas City, Missouri).

Other materials and methods can be used to form the membrane having an open pore structure. The membrane may be rendered permeable by, for example, one or more of perforating, stretching, expanding, bubbling, precipitating or extracting the base membrane. Suitable methods of making the membrane include foaming, skiving or casting any of the suitable materials. In alternate embodiments, the membrane may be formed from woven or non-woven fibers.

In one embodiment, the membrane may be made by extruding a mixture of fine powder particles and lubricant. The extrudate subsequently may be calendered. The calendered extrudate may be "expanded" or stretched in one or more directions, to form fibrils connecting nodes to define a three-dimensional matrix or lattice type of structure. "Expanded" means stretched beyond the elastic limit of the material to introduce permanent set or elongation to fibrils. The membrane may be heated or "sintered" to reduce and minimize residual stress in the membrane material by changing portions of the material from a crystalline state to an amorphous state. In one embodiment, the membrane may be unsintered or partially sintered as is appropriate for the contemplated end use of the membrane.

In one embodiment, continuous pores may be produced. Suitable porosity may be in a range of greater than about 10 percent by volume. In one embodiment, the porosity may be in a range of from about 10 percent to about 20 percent, from about 20 percent to about 30 percent, from about 30 percent to about 40 percent, from about 40 percent to about 50 percent, from about 50 percent to about 60 percent, from about 60 percent to about 70 percent, from about 70 percent to about 80 percent, from about 80 percent to about 90 percent, or greater than about 90 percent by volume.

Pore diameter may be uniform from pore to pore, and the pores may define a predetermined pattern. Alternatively, the pore diameter may differ from pore to pore, and the pores may define an irregular pattern. Suitable pore diameters may be less than about 500 micrometers. In one embodiment, an average pore diameter may be in a range of from about 1 micrometer to about 10 micrometers, from about 10 micrometers to about 50 micrometers, from about 50 micrometers to about 100 micrometers, from about 100 micrometers to about 250 micrometers, or from about 250 micrometers to about 500 micrometers. In one embodiment, the average pore diameter may be less than about 1 micrometer, in a range of from about 1 nanometer to about 50 nanometers, from about 50 nanometers to about 0.1 micrometers, from about 0.1 micrometers to about 0.5 micrometers, or from about 0.5 micrometers to abut 1 micrometer. In one embodiment, the average pore diameter may be less than about 1 nanometer.

Surfaces of nodes and fibrils may define numerous interconnecting pores that extend through the membrane between opposite major side surfaces in a tortuous path. In one embodiment, the average effective pore size of pores in the membrane may be in the micrometer range. In one embodiment, the average effective pore size of pores in the membrane may be in the nanometer range. A suitable average effective pore size for pores in the membrane may be in a range of from about 0.01 micrometers to about 0.1 micrometers, from about 0.1 micrometers to about 5 microns, from about 5 micrometers to about 10 micrometers, or greater than about 10 micrometers. A suitable average effective pore size for pores in the membrane may be in a range of from about 0.1 nanometers to about 0.5 nanometers, from about 0.5 nanometers to about 1 nanometer, from about 1 nanometer to about 10 nanometers, or greater than about 10 nanometers.

In one embodiment, the membrane may be a three-dimensional matrix or have a lattice type structure including plurality of nodes interconnected by a plurality of fibrils. Surfaces of the nodes and fibrils may define a plurality of pores in the membrane. The size of a fibril may be in a range of from about 0.05 micrometers to about 0.5 micrometers in diameter taken in a direction normal to the longitudinal extent of the fibril. The specific surface area of the porous membrane may be in a range of from about 9 square meters per gram of membrane material to about 110 square meters per gram of membrane material.

Membranes according to embodiments of the invention may have differing dimensions, some selected with reference to application-specific criteria. In one embodiment, the membrane may have a thickness in the direction of fluid flow in a range of less than about 10 micrometers. In another embodiment, the membrane may have a thickness in the direction of fluid flow in a range of greater than about 10 micrometers, for example, in a range of from about 10 micrometers to about 100 micrometers, from about 100 micrometers to about 1 millimeter, from about 1 millimeter to about 5 millimeters, or greater than about 5 millimeters. In one embodiment, the membrane may be formed from a plurality of differing layers.

Perpendicular to the direction of fluid flow, the membrane may have a width of greater than about 10 millimeters. In one embodiment, the membrane may have a width in a range of from about 10 millimeters to about 45 millimeters, from about 45 millimeters to about 50 millimeters, from about 50 millimeters to about 10 centimeters, from about 10 centimeters to about 100 centimeters, from about 100 centimeters to about 500 centimeters, from about 500 centimeters to about 1 meter, or greater than about 1 meter. The width may be a diameter of a circular area, or may be the distance to the nearest peripheral edge of a polygonal area. In one embodiment, the membrane may be rectangular, having a width in the meter range and an indeterminate length. That is, the membrane may be formed into a roll with the length determined by cutting the membrane at predetermined distances during a continuous formation operation.

A method for forming an article according to the embodiments of the invention is provided. In one embodiment, the method includes allowing a porous membrane to come in contact with a mixture of a surfactant and a solvent. The surfactant, as noted, may function as a superspreader when in solution. The mixture of the surfactant and the solvent may be one or more of a solution, an emulsion, a sol-gel, a gel, or a slurry.

Polar and/or non-polar solvents may be used with the surfactant to form the mixture. Examples of suitable polar solvents include water, alcohols, fatty acids, ketones, glycols, polyethylene glycols, or diols. Examples of suitable non-polar solvents include aromatic solvents, oils (e.g., mineral oil, vegetable oil, silicone oil, and the like), lower alkyl esters of vegetable oils, or paraffinic low molecular weight waxes. In one embodiment, the solvent includes one or more of water, alcohols, fatty acids, ketones, glycols, or diols.

The concentration of the surfactant may be in a range of greater than about 0.1 weight percent, based on the weight of the total mixture. In one embodiment, the concentration of the surfactant may be in a range of from about 0.1 weight percent to about 1 weight percent, from about 1 weight percent to about 2 weight percent, from about 2. weight percent to about 5 weight percent, from about 5 weight percent to about 10 weight percent, from about 10 weight percent to about 25 weight percent, or from about 25 weight percent to about 50 weight percent, based on the weight of the total mixture.

The membrane may be contacted with mixture of the surfactant and the solvent by one or more of immersing, dip-coating, blade-coating, spin-coating, solution-casting, and the like. In one embodiment, the membrane may be contacted with a mixture of the surfactant and the solvent by immersing the membrane in a mixture of a surfactant and a solvent.

The solvent may be removed from the membrane either during the contacting step, for example, during spin-coating, or after the contacting step. In one embodiment, solvent may be removed by one or both of heating or application of vacuum. Removal of the solvent from the membrane may be measured and quantified by an analytical technique such as, infra-red spectroscopy, nuclear magnetic resonance spectroscopy, thermo gravimetric analysis, differential scanning calorimetric analysis, and the like.

In one embodiment, the surfactant may be absorbed or adsorped onto the membrane without blocking the pores of the membrane. The surfactant may be compatible with the material of the membrane and may impart hydrophilic properties to the membrane surface. Compatible means that the surfactant may "wet-out" the surface of the membrane. In one embodiment, a surface of the membrane may wet in response to contact with a fluid. The fluid may in liquid or vapor form and may include more than one component. In one embodiment, the fluid may include one or more chemical species dissolved or suspended in a mixture of liquids or vapors. In one embodiment, a major component of the fluid may be aqueous liquid or water vapor. In one embodiment, the surfactant may render the membrane wetable from a dry ship state. The membrane may be dried after treatment with the surfactant, and may be shipped in the dried state. The dry membrane or membrane-based articles may be wetted on-site depending upon the end-use application.

An article prepared according to embodiments of the invention may have one or more predetermined properties. Such properties include one or more of a wettability of a dry-shipped membrane, a wet/dry cycling ability, filtering of polar liquid or solution, flow of non-aqueous liquid or solution, flow and/or permanence under low pH conditions, flow and/or permanence under high pH conditions, flow and/or permanence at room temperature conditions, flow and/or permanence at elevated temperature conditions, flow and/or permanence at elevated pressures, transparency to energy of predetermined wavelengths, transparency to acoustic energy, or support for catalytic material. Transparent refers to the ability or capability of transmitting light so that objects or images can be seen as if there were no intervening material, or permeable to electromagnetic radiation of particular frequencies, such as visible light. Permanence refers to the ability of the coating material to maintain function in a continuing manner, for example, for more than one day or more than one cycle (wet/dry, hot/cold, high/low pH, and the like).

In one embodiment, the membrane has a plurality of pores, optionally interconnected, that fluidly communicate with environments adjacent to the opposite facing major sides of the membrane. That is, the pores may extend from one surface of the membrane through the membrane body to another surface of the membrane. The propensity of the material of the membrane to permit a liquid material, for example, an aqueous liquid, to wet, or wet out, and to pass through pores may be expressed as a function of one or more properties. The properties include the surface energy of the membrane, the surface tension of the liquid material, the relative contact angle between the material of the membrane and the liquid material, the size or effective flow area of pores, and the compatibility of the material of the membrane and the liquid material.

The propensity of the article to permit an aqueous liquid to permeate through the pores of the membranes may be measured by measuring the contact angle between a drop of water and a surface of the article. In one embodiment, a 1 microliter drop of water may have a contact angle of less than about 30 degrees on a surface of the article. In one embodiment, a 1 microliter drop of water may have a contact angle in the range of from about 2 degrees to about 5 degrees, from about 5 degrees to about 10 degrees, from about 10 degrees to about 15 degrees, or from about 15 degrees to about 30 degrees, on a surface of the article. In one embodiment, a 1 microliter drop of water may have a contact angle of about 0 degrees on a surface of the article.

Flow rate of fluid through the membrane may be dependent on one or more factors. The factors include one or more of the physical and/or chemical properties of the membrane, the properties of the fluid (e.g., viscosity, pH, solute, and the like), environmental properties (e.g., temperature, pressure, and the like), and the like. In one embodiment, the membrane may be permeable to vapor rather than, or in addition to, fluid or liquid. A suitable vapor transmission rate, where present, may be in a range of less than about 1000 grams per square meter per day (g/m²/day), from about 1000 g/m²/day to about 1500 g/m²/day, from about 1500 g/m²/day to about 2000 g/m²/day, or greater than about 2000 g/m²/day. In one embodiment, the membrane may be selectively impermeable to liquid or fluid, while remaining permeable to vapor.

The membrane may be used to filter water In one embodiment, the water may flow through the membrane at a permeability value that is greater than about 30 g/min-cm² at 0.09 MegaPascals pressure differential at room temperature. In one embodiment, the water may flow through the membrane at a permeability value that is greater than about 35 g/min-cm² at 0.09 MegaPascals pressure differential at room temperature. In one embodiment, the water may flow through the membrane at a permeability value that is greater than about 40 g/min-cm² at 0.09 MegaPascals pressure differential at room temperature. In one embodiment, the water may flow through the membrane at a permeability value that is greater than about 50 g/min-cm² at 0.09 MegaPascals pressure differential at room temperature. In one embodiment, the water may flow through the membrane at a permeability value that is greater than about 75 g/min-cm² at 0.09 MegaPascals pressure differential at room temperature.

In one embodiment, if the molecular weight of the surfactant is sufficiently high, the membrane may be operable to filter water at the desired flow rate even after subjecting the membrane to a number of wet/dry cycles. In one embodiment, the water may flow through the membrane at a flow rate that is greater than about 1 mL/min-cm at 27 inches Hg pressure differential at room temperature after 1 wet/dry cycle. In one embodiment, the water may flow through the membrane at a flow rate that is greater than about 1 mL/min-cm at 27 inches Hg pressure differential at room temperature after 2 wet/dry cycles. In one embodiment, the water may flow through the membrane at a flow rate that is greater than about 1 mL/min-cm at 27 inches Hg pressure differential at room temperature after 5 wet/dry cycles. In one embodiment, the water may flow through the membrane at a flow rate that is greater than about 1 mL/min-cm at 27 inches Hg pressure differential at room temperature after 10 wet/dry cycles. In one embodiment, the water may flow through the membrane at a flow rate that is greater than about 1 mL/min-cm at 27 inches Hg pressure differential at about 100 degrees Celsius after 10 wet/dry cycles. In one embodiment, the water may flow through the membrane at a flow rate that is greater than about 10 mL/min-cm at 27 inches Hg pressure differential at room temperature after 10 wet/dry cycles. In one embodiment, the water may flow through the membrane at a flow rate that is greater than about 10 mL/min-cm at 27 inches Hg pressure differential at 100 degrees Celsius after 10 wet/dry cycles. In one embodiment, the water may flow through the membrane at a flow rate that is greater than about 20 mL/min-cm at 27 inches Hg pressure differential at room temperature after 10 wet/dry cycles. In one embodiment, the water may flow through the membrane at a flow rate that is greater than about 20 mL/min-cm at 27 inches Hg pressure differential at about 100 degrees Celsius after 10 wet/dry cycles. In one embodiment, the water may flow through the membrane at a flow rate that is greater than about 1 mL/min-cm at 27 inches Hg pressure differential at room temperature after 20 wet/dry cycles. In one embodiment, the water may flow through the membrane at a flow rate that is greater than about 1 mL/min-cm at 27 inches Hg pressure differential at 100 degrees Celsius after 20 wet/dry cycles. In one embodiment, the water may flow through the membrane at a flow rate that is greater than about 10 mL/min-cm at 27 inches Hg pressure differential at room temperature after 20 wet/dry cycles. In one embodiment, the water may flow through the membrane at a flow rate that is greater than about 10 mL/min-cm at 27 inches Hg pressure differential at 100 degrees Celsius after 20 wet/dry cycles. In one embodiment, the water may flow through the membrane at a flow rate that is greater than about 20 mL/min-cm at 27 inches Hg pressure differential at room temperature after 50 wet/dry cycles.

The membrane-based article may be flushed after initial use to leave no extractables. Flushing may be carried out by subjecting the membrane to a continuous flow of water or by subjecting the membrane to a number of wet/dry cycles. In one embodiment, the extractables from the membrane are less than about 0.5 percent by weight after each of about 1 wet/dry cycle to about 5 wet/dry cycles using water at room temperature or at about 100 degrees Celsius. In one embodiment, the extractables from the membrane are less than about 0.05 percent by weight after each of about 1 wet/dry cycle to about 5 wet/dry cycles using water at room temperature or at about 100 degrees Celsius. In one embodiment, the extractables from the membrane are less than about 0.005 percent by weight after each of about 1 wet/dry cycle to about 5 wet/dry cycles using water at room temperature or at about 100 degrees Celsius. In one embodiment, the extractables from the membrane are less than about 0.001 percent by weight after each of about 1 wet/dry cycle to about 5 wet/dry cycles using water at room temperature or at about 100 degrees Celsius. In one embodiment, the extractables from the membrane are less than about 0.5 percent by weight after each of about 5 wet/dry cycles to about 10 wet/dry cycles using water at room temperature or at about 100 degrees Celsius. In one embodiment, the extractables from the membrane are less than about 0.5 percent by weight after each of about 10 wet/dry cycles to about 20 wet/dry cycles using water at room temperature or at about 100 degrees Celsius.

Stability of membranes according to embodiments of the invention may also be measured with reference to the pressure drop across the membrane after one or more wet/dry cycles. That is, the membrane may return repeatedly to about the same pressure drop after multiple wet/dry cycles. In one embodiment, the membrane may return to within about 10 percent relative to an immediately preceding pressure drop.

In one embodiment, the membrane may be absorbent, such as water or bodily fluid absorbent. Absorbent includes insignificant amounts of fluid influx and outflow when maintaining equilibrium with a fluidic environment. However, absorbent is distinguishable, and distinguished from, flowable. Flow includes an ability of liquid or fluid to flow from a first surface through the membrane and out a second surface. Thus, in one embodiment, the membrane may be operable to have a liquid or fluid flow through at least a portion of the material in a predetermined direction. The motive force may be osmotic or wicking, or may be driven by one or more of a concentration gradient, pressure gradient, temperature gradient, or the like.

A property of at least one embodiment includes a resistance to temperature excursions in a range of greater than about 100 degrees Celsius, for example, in autoclaving operations. In one embodiment, the temperature excursion may be in a range of from about 100 degrees Celsius to about 125 degrees Celsius, from about 125 degrees Celsius to about 135 degrees Celsius, or from about 135 degrees Celsius to about 150 degrees Celsius. Optionally, the temperature excursion also may be at an elevated pressure relative ambient The temperature excursion may be for a period of greater than about 15 minutes. Resistance to ultraviolet (UV) radiation may allow for sterilization of the membrane, in one embodiment, without loss of properties.

The article according to the embodiment of the invention may have a plurality of sub layers. The sub layers may be the same as, or different from, each other. In one aspect, one or more sub layer includes an embodiment of the invention, while another sub layer may provide a property such as, for example, reinforcement, selective filtering, flexibility, support, flow control, ion exchange and the like.

Membrane-based article prepared according to embodiments of the invention may be used in separation systems, in electrochemical cells, or in medical devices.

A membrane-based article prepared according to the embodiments of the invention may be used in separation systems. The separation systems may be operable to separate one or more inorganic or organic chemical species in a liquid-solid phase, a liquid phase, or a gaseous phase. The membrane may affect separation by allowing a fluid to flow through it. The fluid includes a plurality of at least two components, and one component may pass through the membrane, while another component may not pass through the membrane. The two components may include a solid-liquid-based mixture, for example in liquid filtration; a liquid-liquid-based mixture, for example in hemodialysis; solid-gas-based mixture, for example in air purification; or a gas-gas -based mixture, for example in gas separation applications. The component to be separated may include, for example, salts, ions, biomolecules, bacteria, and the like.

Separation may be affected by concentration gradient or by application of a pressure differential across a membrane. Membrane-based articles for such applications may have the ability to pass certain chemical species while rejecting or preventing the passage of other molecules depending upon the relative differences between the pores size and the size of the chemical species and/or the nature of the chemical interaction between the membrane material and the chemical species. Suitable examples of membrane-based separations include one or more of liquid filtration for example in a water purification system, polarity-based chemical separation, dialysis separation, or gas separation.

The harsh processing as well as operating conditions for one or more of the separation systems may necessitate a need for membranes with high chemical, thermal and mechanical stability, often provided with hydrophobic membranes. However, hydrophobic membranes may often result in membrane fouling when used in a polar media, for example fouling of water filtration membranes or protein adsorption on hemodialysis membranes. Membrane fouling may necessitate expensive and labor intensive cleaning procedures, variable separation properties (permeability and/or selectivity) or complete device failure. Moreover, the separation and reusability characteristics of the membranes may also be affected by the wettability and rewettability properties of the membranes. The improved wetting properties and the hydrophilic characteristics of the articles prepared according to embodiments of the invention may aid in improved membrane performance for separation applications.

A membrane-based article prepared according the embodiments of the invention may be used in a water purification or water treatment system. The water treatment system includes an article in accordance with an embodiment of the invention and a flow-inducing mechanism. The flow inducing mechanism may be operable to flow water containing a chemical species to the membrane. The membrane may filter the water to separate the chemical species from the water.

The membrane architecture (thickness, symmetric, assymetric) and pore sizes, distribution and density may be determined by the end-use application envisaged. A membrane-based article prepared according to the embodiments of the inventions may be used as a reverse osmosis (RO) membrane, a nanofiltration (NF) membrane, an ultrafiltration membrane (UF), or as a microfiltration (MF) membrane.

A membrane-based article prepared according to the embodiments of the invention may be used for seawater desalination. A desalination system may affect separation of ions from water by flowing the seawater across the reverse osmosis membrane using a flow inducing mechanism. The flow inducing mechanism may generate cross-flow of water across the membrane cross-section. Separation may be affected by application of a pressure differential across the membrane in a range of from about 2 bars to about 200 bars. Prior to subjecting the sweater to reverse osmosis membrane, the sea-water may be pretreated to remove bacteria, fungi, biomolecules, divalent ions, and the like. Pre-treatment may be affected by passing the seawater through a number of microfiltration, ultrafiltration and nanofiltration membranes. In one embodiment, a membrane-based article prepared according to the embodiments of the invention may be included in a reverse osmosis membrane system employed for desalination, In another embodiment, a membrane-based article prepared according to the embodiments of the invention may be included in one or more of microfiltration, ultrafiltration or nanofiltration systems employed for pretreatment of seawater prior to desalination. The wetting properties and the hydrophilic characteristics of the articles may improve the fouling resistance resulting in improved separation performance.

A membrane-based article prepared according to the embodiments of the invention may be used as an ion exchange filter, for example, to separate the cathode and the anode in electrochemical cells. As used herein, the terms "ion exchange filter" and "ion exchange membrane" may be used interchangeably. Electrochemical cells include electrolysis cells, such as chloralkali cells; fuel cells having ion-exchange membranes, and the like. One or more properties of an ion exchange filter in an electrochemical cell include: mechanical integrity, low electrical resistance, or high ionic conductivity. Decreasing the filter thickness and/or increasing the liquid permeability may reduce electrical resistance. However, the lower limit of the thickness of the filter may be limited by resulting reduction in mechanical stability. Liquid permeability, wettability and rewettability of the filter (especially in fuel cells) may therefore be one of the factors affecting the performance of the electrochemical cells.

An ionomer and a membrane-based article prepared according to the embodiments of the invention may be used as an ion-exchange membrane (IEM) in a an electrochemical cell. The ionomer communicate with the membrane-based article. Depending upon the type and function of the electrochemical cell, the communication may be one or more of fluid communication, ionic communication, or electrical communication. The electrochemical cell may include an anode, a cathode, an optionally an electrolyte. The membrane-based article may itself function as an IEM, may function as a reinforcing agent, or may function as a substrate, for example, in composite IEMs. In one embodiment, the IEM may function as an electrolyte in the electrochemical cell.

An ionomer includes an ion-exchange material having one or more ion-exchange groups. An ionomer is a low molecular weight ion-containing oligomer or a polymeric material. In one embodiment, ionomers include a perfluorinated polymer that has ionic functionalities or pendant groups. Suitable perfluorinated polymers include, perfluorinated olefins, such as polytetrafluoroethylene (PTFE), polyvinylidenefluoride (PVDF); chloro- and/or bromo- and /or iodo-polyfluoroolefms, for example, chlorotrifluoroethylene (CTFE) or bromotrifluoroethylene; fluoroalkylvinylethers, for example, polytrifluoromethylether, polybromodifluoromethyl ether, polypentafluoropropyl ether; or polyperfluoro-oxyaklyl ether, for example, polyperfluoro-2-propoxy-propyl ether. Suitable polymeric ionomers may be synthesized by copolymerizing unfunctionalized monomers with ion-containing monomers or synthesized by post-polymerization functionalizations. Suitable ionic groups include one or more of, carboxylic acid groups, sulfonic acid groups, sulfuric acid groups, sulfinic acid groups, phosphonic acid groups, or boronic acid groups. The ionic groups may be present in the polymeric ionomers on the backbone or in the side chains.

Other stable ion-exchange resins include polyvinyl alcohol, trifluorostyrene, polyamine, or divinyl benzene/styrene copolymers having the requisite functional groups. The polymers may be additionally mixed with metal salts to obtain the desired functionality and ionic conductivity. Optionally, finely divided powders or other non-ionic polymers can be incorporated into the ion-exchange materials to provide additional properties. Such a finely divided powder may be selected from inorganic compounds such as a metal oxide, nickel, silica, titanium dioxide, or platinum. Such a finely divided powder may be selected from organic compounds such as carbon black or graphite. The powder may provide specific added effects such as different aesthetic appearance (color), electrical conductivity, thermal conductivity, catalytic effects, or enhanced or reduced reactant transport properties. Examples of non-ionic polymers include polyolefins, other fluoropolymers such as polyvinylidene fluoride (PVDF), or other thermoplastics and thermoset resins. Such non- ionic polymers may be added to aid occlusion of the membrane matrix, or to enhance or reduce reactant transport properties. The ionomers maybe present as a uniform coating on the membrane-based article, may be impregnated on the surface as well as the pores of the membrane, or may be chemically reacted with the membrane material.

The liquid permeability, wettability and rewettability of the IEM may be improved because of the superspreading properties of the surfactant in contact with the membrane as described in the embodiments of the the invention. The water permeability of the IEM may be in a range of greater than about 1 1/(h.m².Atm), greater than about 10 1/(h.m².Atm), greater than about 100 1/(h.m².Atm), or greater than about 500 1/(h.m².Atm).

A proton exchange membrane (PEM) can include an article produced according to embodiments of the invention. Such a PEM may have a relatively high water permeability, and may be suitable for use in a fuel cell or in a membrane reactor. The PEM has a reduced tendency to dry at the anode side and to excessively hydrate at the cathode side. An increased water permeability of the membrane may lower resistance to proton transport across the membrane increase electrical conductvity of the membrane in the cells.

In one embodiment, the membrane-based article may be a proton-exchange membrane (PEM) in the fuel cell. The fuel cell may include an anode, a cathode, a catalyst, and optionally an electrolyte. The membrane-based article may itself function as a PEM, may function as a reinforcing agent in a PEM, or may function as a substrate, for example, in a composite PEM. In one embodiment, the PEM may be an electrolyte in the fuel cell. A fuel cell is an electrochemical cell in which the energy of a reaction between a fuel, such as liquid hydrogen, and an oxidant, such as liquid oxygen, is converted directly and continuously into electrical energy (or vice versa).

A medical device may include a membrane-based article prepared according to the embodiments of the invention. A medical device may be a device having surfaces that contact human or animal biologic tissue, cells and/or fluids in the course of their operation. The medical device is biocompatible. Biocompatibility may be characterized by one or more of reduced protein adsorption and denaturation; non-selective cell adhesion; a reduced risk of thrombosis, inflammation, or infection; or improved specific cell adhesion on the surface of a medical device.

The medical device further may include a substrate and/or a biomolecule or biologically active agent (collectively "biomaterial"). A biomaterial may be disposed in, or on, the substrate. Biomaterial is relatively insoluble in human or animal bodily or biologic fluid, and may be designed and constructed to be placed in or onto the body or to contact fluid of the body. A biomaterial does not induce, or has a low incidence of inducing, undesirable reactions in the body, undesirable reactions may include blood clotting, tissue death, tumor formation, allergic reaction, foreign body reaction (rejection), or inflammatory reaction. The biomaterial may have the physical properties such as strength, elasticity, permeability and flexibility required to function for the intended purpose. The biomaterial may be purified, fabricated and sterilized. The biomaterial may maintain its physical properties and function during the time that it remains implanted in, or is in contact with, the body.

Suitable biomaterials include metals such as titanium, aluminum, nickel, platinum, steel, silver, and gold. Suitable biomaterials include alloys such as titanium-nickel alloys, shape memory alloys, super elastic alloys, aluminum oxide alloys, platinum alloys, stainless steels, stainless steel alloys, MP35N, elgiloy, haynes 25, or cobalt alloys such as stellite. Non-metal biomaterials may include one or more of minerals or ceramics, pyrolytic carbon, silver-coated carbon, or glassy carbon. Suitable minerals or ceramics may include hydroxapatite. Polymeric biomaterials may include polymers such as polyamides, polycarbonates, polyethers, polyesters, some polyolefins - including polyethylenes or polypropylenes, polystyrenes, polyurethanes, polyvinylchlorides, polyvinylpyrrolidones, silicone elastomers, fluoropolymers, polyacrylates, polyisoprenes, polytetrafluoroethylene, or rubber. Other biomaterials may include human or animal protein or tissue such as bone, skin, teeth, collagen, laminin, elastin, or fibrin.

Suitable biomaterials include an anticoagulant agent such as heparin and heparan sulfate, an antithrombotic agent, a clotting agent, a platelet agent, an antiinflammatory agent, an antibody, an antigen, an immunoglobulin, a defense agent, an enzyme, a hormone, a growth factor, a neurotransmitter, a cytokine, a blood agent, a regulatory agent, a transport agent, a fibrous agent, a viral agent, a protein such as a glycoprotein, a globular protein, a structural protein, a membrane protein and a cell attachment protein, a viral protein, a peptide such as a glycopeptide, a structural peptide, a membrane peptide and a cell attachment peptide, a proteoglycan, a toxin, an antibiotic agent, an antibacterial agent, an antimicrobial agent such as penicillin, ticarcillin, carbenicillin, ampicillin, oxacillian, cefazolin, bacitracin, cephalosporin, cephalothin, cefuroxime, cefoxitin, norfioxacin, perfioxacin and sulfadiazine, hyaluronic acid, a polysaccharide, a carbohydrate, a fatty acid, a catalyst, a drug, a vitamin, a nucleic acid sequence or segment thereof (such as a DNA segment or an RNA segment), a lectin, a ligand and a dye (which acts as a biological ligand).

The substrate may have a tubular, cylindrical, sheet, curved rod, or other suitable shape based on the end use. The membrane-based article may contact one or more of the surfaces of the medical device. Depending upon the application desired, the membrane-based article might be in contact with an outer surface of the medical device (for example, in a surgical instrument), an inner surface of the medical device (for example, in a catheter), or both outer and inner surfaces of the medical device (for example in a vascular stent). In some embodiments, no substrate may be present and the membrane may itself form a medical device, for example, a drug delivery device.

The membrane-based article may also improve the visualization or imaging characteristics of a medical device implanted in a human body. One or more of remote imaging techniques such as fluoroscopy, ultrasound/and or optical imaging may aid in the visualization of the implanted medical device. In one embodiment, the super-spreading surfactant may hydrophilicize the membrane surface. The hydrophilicity increases wetting (increases the contact angle) of the surface. The increased wetting of the membrane surface with a biologic fluid or a bodily fluid may increase the transparency or translucency leading to better visualization.

In some embodiments, the medical device further may include a visualisation enhancer. A visualisation enhancer includes one or more of a biomarker, a contrast agent, an imaging agent, or a diagnostic agent. A visualisation enhancer is a compound, composition or formulation that enhances, contrasts or improves the visualization or detection of an object or system in ultrasound or optical imaging.

Ultrasound contrast agents may be based on density or acoustical properties. An ultrasound contrast agent may be echogenic that is capable of reflecting or emitting sound waves. In some embodiments microbubbles may be used as contrast agents for ultrasound imaging. The contrast agents may be formulated from one or more of from lipids, polymeric materials, proteins, and the like. The lipids, polymers, and/or proteins may be natural, synthetic or semi- synthetic. Optical imaging agents include one or more of chromophores, fluorophores, fluorochromes, absorption chromophores, fluoroscence quenchers, and the like.

Medical devices include extracorporeal devices for use in surgery such as blood oxygenators, blood pumps, blood sensors, tubing-used to carry blood, and the like. Medical devices include endoprostheses implanted in blood vessels or in the heart such as vascular grafts, stents, pacemaker leads, and heart valves. Suitable medical devices include catheters, guide wires, or devices that are placed into the blood vessels or the heart for purposes of monitoring or for repair. Medical devices may also include *ex-vivo* or *in-vivo* devices used for bioanalytical applications, such as protein or cell separations; microfluidic devices; drug delivery devices, or tissue engineering scaffolds.

Some other examples of medical devices that include a membrane-based article are vascular grafts, aortic grafts, arterial, venous, or vascular tubing, vascular stents, dialysis membranes, tubing or connectors, blood oxygenator tubing or membranes, ultrafiltration membranes, intra-aortic balloons, blood bags, catheters, sutures, soft or hard tissue prostheses, synthetic prostheses, prosthetic heart valves, tissue adhesives, cardiac pacemaker leads, artificial organs, endotracheal tubes, lenses for the eye such as contact or intraocular lenses, blood handling equipment, apheresis equipment, diagnostic and monitoring catheters and sensors, biosensors, dental devices, drug delivery systems, or bodily implants.

### EXAMPLES

The following examples are intended only to illustrate methods and embodiments in accordance with the invention, and as such should not be construed as imposing limitations upon the claims. Unless specified otherwise, expanded polytetrafluoroethylene (e-PTFE) porous membrane was obtained from General Electric Energy (Kansas City, Missouri) and an organosiloxane-based superspreading surfactant SILWET L-77 (hereinafter refereed to as "SS1") was obtained from General Electric Advanced Materials Silicones (Pittsfield, Massachusetts). As used in the Examples, e-PTFE has a pore size in a range of from about 5 micrometers. An organosilane-based superspreading surfactant having formula XVI (hereinafter referred to as "SS2") and a t-butyl trisiloxane-based superspreading surfactant having formula XVII (hereinafter referred to as "SS3") are prepared using hydrosilylation reaction. 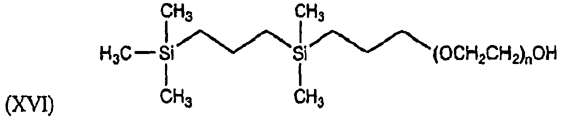 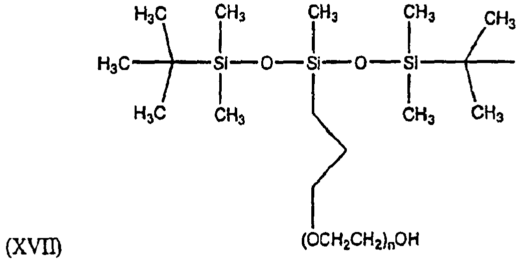 wherein the number average molecular of the oxyethylene units in formula (XVI) is about 350 and the number average molecular of the oxyethylene units in formula (XVII) is about 550.

Isopropanol (hereinafter referred to as "IPA") and a commercially available dodecyl benzene sulfonic acid-based surfactant ("NEOPELEX") are used for comparative examples. Unless specified otherwise, all ingredients and equipment is commercially available from such common chemical suppliers as Alpha Aesar, Inc. (Ward Hill, Massachusetts) and Spectrum Chemical Mfg. Corp. (Gardena, California), and the like.

### EXAMPLE 1

SILWET L-77 is dissolved in water at a concentration of 0.1 weight percent of the final solution. A virgin e-PTFE membrane sample is treated with the SILWET L-77 solution for duration of about 30 minutes. After 30 minutes, the membrane is totally wetted by the aqueous solution as evidenced by its transparency. The wetted membrane is dried in an oven at a temperature of about 100 degrees Celsius resulting in a dried treated membrane, Sample 1.

### EXAMPLE 2

SILWET L-77 is dissolved in ethanol at a concentration of 0.1 weight percent of the final solution. A virgin e-PTFE membrane sample is treated with the SILWET L-77 solution for duration of about I minute. After I minute the membrane is totally wetted by the aqueous solution as evidenced by its transparency. The wetted membrane is dried in an oven at a temperature of about 100 degrees Celsius resulting in a dried treated membrane, Sample 2.

### EXAMPLE 3

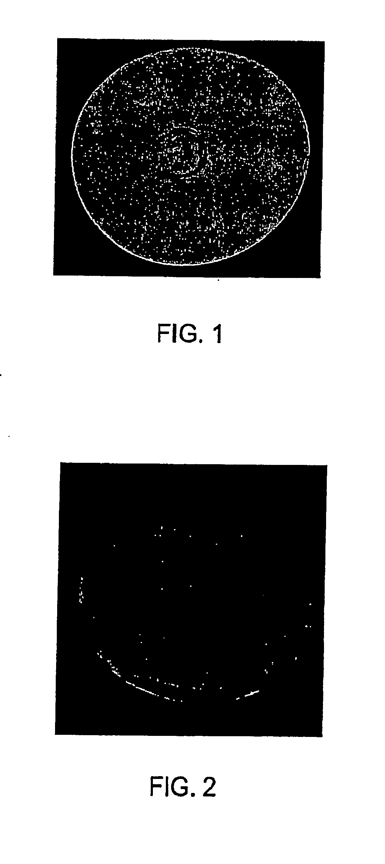

A drop of water (1 microliter to 5 microliter) is pippeted onto a virgin e-PTFE membrane and Samples I and 2 prepared as above. As illustrated in Fig. 1, the water droplet beads up on the surface of the virgin-ePTFE membrane exhibiting contact angles greater than about 90 degrees. Samples 1 and 2, on the other hand, are completely wetted by the water droplet, with a contact angle of about 0 degrees, as illustrated in Fig. 2.

### EXAMPLE 4

Portions of each of SS1, SS2, SS3 and NEOPELEX are diluted with distilled water to a concentration of 0.1 or 0.6 weight percent. Aliquots (10 microliters) of the aqueous solutions (0.1 weight percent or 0.6 weight percent) of the surfactants and an aliquot (10 microliter) of distilled water are applied to a surface of a polystyrene petri dish. A hygrometer is placed next to the petri dish, and the petri dish is covered with a recrystallization dish. At 30 seconds the cover is removed and the perimeter of the droplet is checked and recorded. The spread diameter (in millimeters) of two perpendicular axes is measured 3 times for each sample. The average spread diameter is obtained from the six measured diameters. This test is carried out under controlled relative humidity that is selected to be between 35 percent and 70 percent, and at a temperature in a range of from about 22 degrees Celsius to about 26 degrees Celsius. The spread diameters and the surface tension values obtained are tabulated in Table 1.

**Table 1. Spreading Tests Results**

| Surfactant | Concentration (wt%) | Spread Diameter (mm) | Surface Tension (mN/m) |
|---|---|---|---|
| SS1 | 0.1 | 43 | 20.70 |
| SS2 | 0.1 | 44 | 22.90 |
| SS3 | 0.6 | 22 | 23.80 |
| Neopelex | 0.1 | <4 | - |
| Distilled Water | balance | <4 | 72 |

### EXAMPLE 5

SS1, SS2, SS3 and NEOPELEX are dissolved in water at a concentration of 0.5 weight percent of the final solution. Four different virgin e-PTFE membrane samples are treated with the SS1, SS2, SS3, and NEOPELEX solutions overnight and allowed to dry in air to form SS1-treated e-PTFE membrane (Sample 3), SS2-treated e-PTFE membrane (Sample 4), SS-3-treated e-PTFE membrane (Sample 5), and NEOPELEX-treated e-PTFE membrane (Sample 6).

### EXAMPLE 6

IPA is dissolved in water at a concentration of 0.5 weight percent of the final solution. A virgin e-PTFE membrane is treated with the IPA solution overnight and further subjected to water permeability tests in the wet state (Sample 7).

### EXAMPLE 7

Water permeabilities of Samples 3, 4, 5, 6 and 7 are measured by continuously flowing water through the membrane at room temperature, at a pressure of about 0.09 MegaPascals, and for a duration of about 5 minutes. The water permeability values are determined as the amount of water per unit time per unit surface area. Table 2 lists the permeability values measured for Samples 3, 4, 5, 6 and 7. As shown in Table 2, water permeabilities of the membranes treated with the super-spreading surfactants (Samples 3, 4 and 5) were greater than those of membranes treated with a non-super spreading surfactant (Sample 6) or IPA (Sample 7).

**Table 2. Water permeability measurements**

| Sample | Water Permeability (g/min.cm²) |
|---|---|
| 3 | 64.2 |
| 4 | 64.8 |
| 5 | 51.5 |
| 6 | 30.3 |
| 7 | 36.8 |

Reference is made to substances, components, or ingredients in existence at the time just before first contacted, formed in situ, blended, or mixed with one or more other substances, components, or ingredients in accordance with the present disclosure. A substance, component or ingredient identified as a reaction product, resulting mixture, or the like may gain an identity, property, or character through a chemical reaction or transformation during the course of contacting, in situ formation, blending, or mixing operation if conducted in accordance with this disclosure with the application of common sense and the ordinary skill of one in the relevant art (e.g., chemist). The transformation of chemical reactants or starting materials to chemical products or final materials is a continually evolving process, independent of the speed at which it occurs. Accordingly, as such a transformative process is in progress there may be a mix of starting and final materials, as well as intermediate species that may be, depending on their kinetic lifetime, easy or difficult to detect with current analytical techniques known to those of ordinary skill in the art.

Reactants and components referred to by chemical name or formula in the specification or claims hereof, whether referred to in the singular or plural, may be identified as they exist prior to coming into contact with another substance referred to by chemical name or chemical type (e.g., another reactant or a solvent). Preliminary and/or transitional chemical changes, transformations, or reactions, if any, that take place in the resulting mixture, solution, or reaction medium may be identified as intermediate species, master batches, and the like, and may have utility distinct from the utility of the reaction product or final material. Other subsequent changes, transformations, or reactions may result from bringing the specified reactants and/or components together under the conditions called for pursuant to this disclosure. In these other subsequent changes, transformations, or reactions the reactants, ingredients, or the components to be brought together may identify or indicate the reaction product or final material.

The foregoing examples are illustrative of some features of the invention. The appended claims are intended to claim the invention as broadly as has been conceived and the examples herein presented are illustrative of selected embodiments from a manifold of all possible embodiments. Accordingly, it is Applicants' intention that the appended claims not limit to the illustrated features of the invention by the choice of examples utilized. As .used in the claims, the word "comprises" and its grammatical variants logically also subtend and include phrases of varying and differing extent such as for example, but not limited thereto, "consisting essentially of" and "consisting of." Where necessary, ranges have been supplied, and those ranges are inclusive of all sub-ranges there between. It is to be expected that variations in these ranges will suggest themselves to a practitioner having ordinary skill in the art and, where not already dedicated to the public, the appended claims should cover those variations. Advances in science and technology may make equivalents and substitutions possible that are not now contemplated by reason of the imprecision of language; these variations should be covered by the appended claims.

## Claims

**1.** An article, comprising:
a membrane having pores extending from a first surface through the membrane to a second surface; and
a surfactant in contact with at least one surface of the membrane, and the surfactant is capable of functioning as a superspreader when in solution, and the article is capable of wetting the membrane in response to contact with a fluid.

**2.** The article as defined in claim 1, wherein one of the following (i)-(xiv):
(i)the surfactant comprises an organosiloxane having formula (I):
(I) (R¹R²R³SiO_{1/2}(R⁴R⁵SiO_{2/2})ₙ(R⁶R¹⁰SiO_{2/2})ₚ(R⁷R⁸R⁹SiO_{1/2})
wherein "n" is an integer from 0 to 50; "p" is an integer from I to 50; R¹ to R⁹ are independently at each occurrence a hydrogen atom, an aliphatic radical, an aromatic radical, or a cycloaliphatic radical; and R¹⁰ is a polyoxyalkylene having formula (II):
(II) R¹³(C₂H₃R¹¹O)_{w}(C₃H₆O)ₓ(C₄H₈O)_{y}R¹²
wherein "w", "y" and "z" are independently an integer from 0 to 20, with the proviso that "w" is greater than or equal to 2 and "w + x + y" is in a range of from about 2 to about 20; R¹¹ is a hydrogen atom or an aliphatic radical, R¹² is a hydrogen atom, an aliphatic radical, or a carboxylate; and R¹³ is a divalent aliphatic radical having structure (III):
(III) -CH₂-CH(R¹⁴)(R¹⁵)_{z}O-
wherein R¹⁴ is a hydrogen atom or an aliphatic radical, R¹⁵ is a divalent aliphatic radical, and "z" is 0 or 1; or
(ii) the surfactant comprises a first hydrophobic moiety linked to a spacer, and the spacer is linked to a second hydrophobic moiety to form a Gemini surfactant, and each hydrophobic moiety comprises at least one silicon atom; or
(iii)the surfactant comprises an organosiloxane having formula (XIII):
(XIII) (R⁵⁶R⁵⁷R⁵⁸SiO_{1/2})(R⁵⁹R⁶⁰SiO_{2/2})ⱼ(R⁶⁰R⁶¹R¹⁰SiO_{1/2})
wherein "j" is an integer from 0 to 50; R⁵⁶ is a branched aliphatic radical, an aromatic radical, a cycloaliphatic radical, or R⁶²R⁶³R⁶⁴SiR⁶⁵; R⁵⁷ and R⁵⁸ are independently at each occurrence a hydrogen atom, an aliphatic radical, an aromatic radical, a cycloaliphatic radical, or a R⁵⁶ radical; R⁵⁹, R⁶⁰, R⁶², R⁶³, and R⁶⁴ are independently at each occurrence a hydrogen atom, an aliphatic radical, an aromatic radical, or a cycloaliphatic radical; R⁶⁵ is a divalent aliphatic radical, a divalent aromatic radical, or a divalent cycloaliphatic radical; R⁶⁰ and R⁶¹ are independently at each occurrence a hydrogen atom, an aliphatic radical, an aromatic radical, a cycloaliphatic radical, or a R⁵⁶ radical; and R¹⁰ is a polyoxyalkylene having formula (II):
(II) R¹³(C₂H₃R¹¹O)_{w}(C₃H₆O)ₓ(C₄H₈O)_{y}R¹²
wherein "w", "y" and "z" are independently an integer from 0 to 20, with the proviso that "w" is greater than or equal to 2 and "w + x + y" is in a range of from about 2 to about 20; R¹¹ is a hydrogen atom or an aliphatic radical, R¹² is a hydrogen atom, an aliphatic radical, or a carboxylate; and R¹¹ is a divalent aliphatic radical having structure (III):
(III) -CH₂-CH(R¹⁴)(R¹⁵)_{z}O-
wherein R¹⁴ is a hydrogen atom or an aliphatic radical, R¹⁵ is a divalent aliphatic radical, and "z" is 0 or 1; or
(iv) an aqueous solution of the surfactant has a surface tension in a range of less than about 40 mN/m, at a concentration greater than about 0.1 weight percent; or
(v) a 10 microliter drop of an aqueous solution of the surfactant spreads to a diameter greater than five times as large on a hydrophobic surface as a 10 microliter drop of distilled water on the hydrophobic surface, wherein the diameter is measured 30 seconds after application of the drop to the hydrophobic surface; or
(vi) the surfactant is hydrolytically stable in an aqueous solution at a pH in a range of from about 2 to about 10; or
(vii) the membrane is formed from a material selected from the group consisting of polyalkene, polyarylene, polyamide, polyester, polysulfone, polyether, polyacrylic, polystyrene, polyurethane, polyarylate, polyimide, polycarbonate, polyphenylene oxide, and cellulosic polymer; or a substituted derivative of one or more of the foregoing; or
(viii) the membrane comprises a halogenated polyalkene; or
(ix) the membrane comprises one or both of polyvinylidenefluoride or polytetrafluoroethylene; or
(x) the membrane is expanded, stretched, bubbled, precipitated, perforated, or extracted to form pores that correspond in shape, size, volume, or character to the pore forming method; or
(xi) the pores have an average diameter in a range of from about 1 nanometer to about 1000 micrometers; or
(xii) the surfactant is operable to render the membrane wetable from a dry ship state; or
(xiii) a 1 microliter drop of water has a contact angle of less than about 30 degrees on a surface of the article; or
(xiv) the article has a flow rate of water that is greater than about 1 mL/min-cm at 27 inches Hg pressure differential after 10 wet/dry cycles at room temperature.

**3.** The article as defined in claim 2, part (i) wherein the surfactant comprises a trisiloxane alkoxylate.

**3.** The article as defined in claim 2, part (ii) wherein
(a) the spacer comprises a moiety selected from the group consisting of an ammonium group, a carboxylic acid group, a sulfonic acid group, a sulfuric acid group, a sulfinic acid group, a phosphonic acid group, a boronic acid group, a fatty acid group, a fatty acid ester group, a peptide group, a carbohydrate group, and a polyether; or
(b) the spacer comprises a polyether having formula (VI)
(VI) -(CH₂)ₐ-O-(C₂H₄O)_{b}(C₂H₃R¹⁶O)_{c}-(CH₂)ₐ-
wherein "a" is independently at each occurrence an integer from 1 to 6, "b" and "c" are independently integers from 0 to 12, with the proviso that "b + c" is less than or equal to 12, and R¹⁶ is an aliphatic radical; or
(c) one or both of the first hydrophobic moiety or the second hydrophobic moiety comprises an organosiloxane group having a formula (VII) or (VIII):
(VII) (R¹⁷R¹⁸R¹⁹SiO_{1/2})₂(R²⁰R²¹SiO_{2/2})_{d}(R²²SiO_{2/2})-
(VIII) (R²³R²⁴R²⁵SiO_{1/2})(R²⁶R²⁷SiO_{2/2})_{f}(R²⁸R²⁹SiO_{1/2})-
wherein "d" is an integer from 0 to 50, "f' is an integer from 1 to 50, and R¹⁷ to R²⁹ are independently at each occurrence a hydrogen atom, an aliphatic radical, an aromatic radical, or a cycloaliphatic radical; or
(d) one or both of the first hydrophobic moiety or the second hydrophobic moiety comprises an organosilane group having a formula (IX), (X), (XI) or (XII):
(IX) (R³⁰R³¹R³²Si)₂(R³³R³⁴Si)_{d}(R³⁵Si)-
(X) (R³⁶R³⁷R³⁸Si)(R³⁹R⁴⁰Si)_{f}(R⁴¹R⁴²Si)-
(XI) (R⁴³R⁴⁴R⁴⁵Si)₂(CR⁴⁶R⁴⁷)_{d}(R⁴⁸Si)-
(XII) (R⁴⁹R⁵⁰R⁵¹Si)(CR⁵²R⁵³)_{f}(R⁵⁴R⁵⁵Si)-
wherein "d" is independently at each occurrence an integer from 0 to 50, "b" is independently at each occurrence an integer from 1 to 50, and R³⁰ to R⁵⁵ are independently at each occurrence a hydrogen atom, an aliphatic radical, an aromatic radical, or a cycloaliphatic radical.

**5.** A method, comprising:
contacting a porous membrane with a surfactant, wherein the surfactant has a capability to function as a superspreader when in solution; and
contacting the membrane with a fluid.

**6.** The method as defined in claim 5, further comprising one of the following (i)-(v):
(i)mixing the surfactant and the solution to form one or more of a surfactant solution, a surfactant stabilized emulsion, a surfactant mediated sol-gel, a surfactant mediated gel, or a slurry; or
(ii) the solution comprises one or more of water, alcohol, fatty acid, ketone, glycol, or diol; or
(iii) further comprising removing a solvent from the solution by one or both of heating or of applying a vacuum; or
(iv) further comprising flowing the fluid through the membrane at a flow rate that is greater than about 1 mL/min-cm at 27 inches Hg pressure differential at room temperature after 10 wet/dry cycles; or
(v) further comprising flowing the fluid through the membrane pores and separating a chemical species from the solution such that the fluid is enriched with the chemical species on a first side of the membrane and the fluid is depleted of the chemical species on a second side of the membrane.

**7.** The method as defined in claim 6, part (i) wherein contacting comprises immersing the membrane in the mixture of the surfactant solution.

**8.** The method as defined in claim 6, part (iii) comprising cycling the membrane through two or more wet/dry cycles after removal of the solvent.

**9.** An article, comprising:
a chemically inert, hydrophobic, means for filtering fluid; and
means for hydrophiliphizing a surface of the fluid filtering means.

**10.** The article as defined in claim 9, wherein the fluid filtering means is porous or perforated.
